# EUROPEAN PATENT SPECIFICATION

(11) **EP 1 036 952 B1**
(45) Date of publication and mention of the grant of the patent: **10.11.2004**
(21) Application number: 00101849.8
(22) Date of filing: 31.01.2000
(51) Int. Cl.: F16F 13/26

(54) **HYDRAULIC VIBRATION ISOLATOR**
ELASTO-HYDRAULISCHER SCHWINGUNGSISOLATOR
ISOLATEUR ANTI-VIBRATIONS ELASTO-HYDRAULIQUE

(30) Priority: 18.03.1999 JP 7297399; 23.08.1999 JP 23546099
(43) Date of publication of application: 20.09.2000
(73) Proprietor: TOYO TIRE & RUBBER CO., LTD ., Nishi-ku, Osaka-shi, Osaka 550-0002 (JP)
(72) Inventor: Nakagaki, Osamu, Ichinomiya-shi (JP); Suzuki, Tatsuo, Inazawa-shi (JP); Yamada, Norihiro, Inazawa-shi (JP); Asano, Tetsuo, Komaki-shi (JP); Miyoshi, Keiji, Haguri-gun, Aichi-ken. (JP)
(74) Representative: Pellmann, Hans-Bernd, Dipl.-Ing.

(56) References cited:
- US-A- 5 167 403
- US-A- 5 215 293
- PATENT ABSTRACTS OF JAPAN vol. 1998, no. 12, 31 October 1998 (1998-10-31) & JP 10 184775 A (TOYODA GOSEI CO LTD), 14 July 1998 (1998-07-14)

## Description

### BACKGROUND OF THE INVENTION

The present invention relates to a hydraulic vibration isolator which has an incompressible fluid sealed therein to produce a vibration damping effect from the flow of this liquid. More specifically, the invention relates to a hydraulic vibration isolator for mounting an engine or the like. The isolator changes its vibration damping characteristic on the fluid flow in a plurality of steps by using a vibrator driven by a negative suction pressure of the engine and sets the vibration damping characteristic in such a way that a characteristic for engine idling vibrations and a characteristic for engine shakes influence each other. The isolator, while the engine is in an idling revolution range, effects the above changing in synchronism with other than a first degree frequency of engine explosion-induced vibrations.

In vibration isolators, an automotive engine mount in particular must be able to cope with a wide range of vibration frequencies because the engine as a driving source is operated under a variety of circumstances from an idling state to a maximum revolution speed. Japanese Patent Unexamined Publication No. H5-149369 proposes a hydraulic vibration isolator of a so-called voice coil type to cover such a wide range of operation. This isolator has fluid chambers accommodating an oscillator, such as a voice coil, that vibrates at a specific frequency. This known isolator has a complex structure which includes a plurality of liquid chambers, a moving piece such as piston, and a voice coil for driving the moving piece. Because this structure requires many parts such as vibration coil and permanent magnet, the overall weight of the isolator increases.

Japanese Patent Unexamined Publication No. H10-184775 filed by the assignee of the present patent application proposes a hydraulic vibration isolator for solving the above-described problem. This isolator includes a vibrator of a simple structure driven by the negative suction pressure of engine and isolates engine revolution-induced vibrations including idling vibrations.

The vibration isolator according to Japanese Patent Unexamined Publication No. H10-184775 has a main chamber to which engine vibrations are propagated and an auxiliary chamber connected to the main chamber through a first orifice, with an incompressible fluid flowing between these chambers to damp engine shakes, i.e., low-frequency vibrations of mainly 5-15 Hz. That is, when the fluid pressure in the main chamber increases, as when an engine shake is input, the fluid in the main chamber is allowed to flow into the auxiliary chamber through the first orifice to obtain a high damping characteristic based on the flow resistance. The isolator further includes a third fluid chamber connected to the main chamber through a second orifice and an equilibrium chamber adjoining the third fluid chamber with an elastic diaphragm therebetween. The diaphragm is vibrated by the negative suction pressure of engine to absorb vibrations of around 25-40 Hz corresponding to the idling vibrations. The provision of the two separate orifices independent of each other therefore damps the engine shakes and absorbs and isolates idling vibrations of the engine.

### SUMMARY OF THE INVENTION

The vibration isolator disclosed in Japanese Patent Unexamined Publication No. 10-184775 sets the diameters and lengths of the first and second orifices to make the first and second orifices resonate with vibrations of about 5-15 Hz and about 25-40 Hz, respectively, so that their orifice characteristics do not interfere with each other. Hence, the dynamic spring characteristic for vibrations of engine idling has conventionally been reduced by tuning only the second orifice. The present inventors of the present invention have found that the vibration damping characteristic of the vibration isolator in the engine idling vibration range can be improved by making the resonance frequencies determined by these orifices affect each other.

The inventors have also found that when the engine idling revolution is relatively low, the vibrations resonating with the second or third degree component of engine explosion-induced vibrations affect the actual noise or vibration level in the automotive cabin.

The present invention has been accomplished based on these findings. It is an object of the invention to provide a hydraulic vibration isolator which can produce an improved vibration damping characteristic by reducing the dynamic spring constant in the engine idling revolution range.

Another object of the invention is to provide a hydraulic vibration isolator which can reduce vibration and noise levels produced by higher degree vibrations such as second or third degree frequency of engine explosion-induced vibrations.

The present invention is defined by the combination of the features of the preamble of claim 1 (see US-A-5 167 403) and the features cited in the characterizing portion of claim 1.

With this construction, the hydraulic vibration isolator according to the invention produces the following effects. When the isolator is in operation, because the resonance frequencies of the first orifice and the second orifice interferingly influence each other, the dynamic spring constant of the isolator in the frequency range of the engine idling vibrations significantly decreases. The reduction in the dynamic spring constant ensures efficient absorption and isolation of the engine idling vibrations. The second orifice of a predetermined volume connects the main chamber to the third fluid chamber that is subjected to the pressure variation caused by the operation of the second diaphragm. The fluid in the second orifice is made to resonate with the fluid pressure variation in the main chamber by the operation of the equilibrium chamber, i.e., the operation of the second diaphragm. Therefore, the energy supplied to the equilibrium chamber is amplified to absorb and isolate the idling vibrations precisely. For the engine shakes which are lower in frequency than the idling vibrations, the damping force produced by the fluid flowing through the first orifice connecting the main chamber and the auxiliary chamber is used to suppress the engine shakes.

It is preferred that the first orifice be connected in series with the second orifice and communicate with the main chamber through the second orifice. In this case, the vibrating force generated in the third fluid chamber by the vibration of the second diaphragm is further amplified by the resonating action of the first orifice and is propagated to the fluid in the main chamber through the second orifice. Hence, the vibrating force or vibration generating force can be amplified by the first orifice as it is supplied to the main chamber, further enhancing the capability to absorb and isolate the idling vibrations. As for the input of engine shakes, because only the second orifice is directly open to the main chamber, the fluid in the main chamber flows into the auxiliary chamber through the second orifice and the first orifice. As a result, high damping characteristic can be obtained, which in turn assures efficient absorption and isolation of engine shakes.

It is preferred that the first and second orifices be formed in the same component or in a partition plate that separates the main chamber and the auxiliary chamber. In either case, the number of parts can be reduced, simplifying the structure and reducing the cost.

It is preferred that the controller be formed to control the second diaphragm to vibrate in synchronism with other than a first degree frequency of engine explosion-induced vibrations in a low revolution region of an engine idling revolution range, the engine idling revolution range being divided at a predetermined transformation point into a low revolution region and a high revolution region.

It is further preferred that the controller be formed to control the second diaphragm to vibrate in synchronism with the first degree frequency of engine explosion-induced vibrations in the high revolution region. In that case, when the engine idling revolution is relatively low, the vibration/noise level generated by the second degree component of the idling vibrations can be reduced. In a higher region of the engine idling revolution as during idle-up, the vibration/noise level due to the first degree component can be reduced. Therefore, vibration/noise reduction in the whole range of the idling revolution can be realized.

### BRIEF DESCRIPTION OF THE DRAWINGS

The above and other features and advantages of the invention will become more apparent from the following description taken in conjunction with the accompanying drawings, of which:
Figure 1 is a vertical cross section showing a first embodiment of the hydraulic vibration isolator according to the invention;
Figure 2 is a graph showing a resonance characteristic of the vibration isolator of the invention as compared with that of a conventional isolator;
Figure 3 is a vertical cross section showing a second embodiment of the vibration isolator according to the invention;
Figure 4 is a graph showing an amplified state of a vibration force or a vibration generating force in the isolator shown in Figure 3;
Figure 5 is a graph showing a dynamic spring constant and a state of a vibration force or a vibration generating force in the vibration isolator of the invention;
Figure 6 is a cross section of a variation of the vibration isolator shown in Figure 3;
Figure 7 is a top view showing a first and a second orifice in the vibration isolator of Figure 6;
Figure 8 is a cross section showing a variation of the vibration isolator shown in Figure 3;
Figure 9 is a top view showing a first and a second orifice in the vibration isolator of Figure 8;
Figure 10 is a cross section showing a third embodiment of the vibration isolator according to the invention;
Figure 11 is a graph showing how the vibration isolator of Figure 10 reduces a vibration input containing higher degree components;
Figure 12 is a graph showing a vibration characteristic of the vibration isolator of Figure 10;
Figure 13 is a graph showing a conventional vibration characteristic; and
Figure 14 is a cross section showing a fourth embodiment of the vibration isolator according to the invention.

### DESCRIPTION OF THE PREFERRED EMBODIMENTS

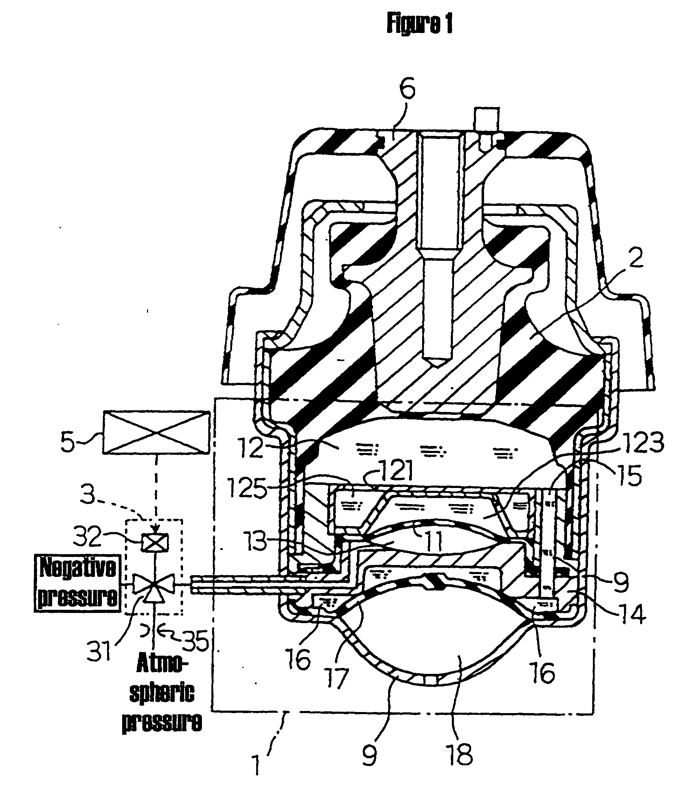

First, the vibration isolator according to the first embodiment of the invention will be described. The isolator, as shown in Figure 1, basically comprises an upper coupling member 6, a lower coupling member 9, an insulator 2, and a vibration isolating mechanism 1.

The upper coupling member 6 constitutes a first coupling member for mounting the vibration isolator to a vibrating body such as engine. The lower coupling member 9 constitutes a second coupling member for mounting the vibration isolator to a member on the chassis side. The insulator 2 is arranged between the upper coupling member 6 and the lower coupling member 9 to absorb or isolate vibrations from the vibrating body.

The vibration isolating mechanism 1 is arranged in series with the insulator 2. The vibration isolating mechanism 1 includes a main chamber 12 and an auxiliary chamber 16, and a first orifice 15 connecting the main chamber 12 and the auxiliary chamber 16. The vibration isolating mechanism 1 further includes a selector 3 and a controller 5, and these devices form a part of the vibration isolating mechanism 1. The selector 3 is switched to introduce a negative pressure or an atmospheric pressure continuously into an equilibrium chamber 13 described later or to introduce the negative pressure and the atmospheric pressure alternately in synchronism with the engine vibrations. The controller 5 controls the switching operation of the selector 3.

The insulator 2 is made of a rubber-like elastic material such as vibration damping rubber and one of its end faces is integrally connected to the upper coupling member 6 with a curable adhesive. The vibration isolating mechanism 1 is provided below and adjoining the insulator 2.

The vibration isolating mechanism 1 also has a third fluid chamber 123 and an air chamber 18 in addition to the main chamber 12, auxiliary chamber 16, first orifice 15 and equilibrium chamber 13. The main chamber 12 is formed in contact with the insulator 2 so that vibrations can directly propagate to the main chamber 12. The auxiliary chamber 16 is separated from the main chamber 12 by a partition plate 14, through which the first orifice 15 vertically penetrates to allow the fluid to flow between the main chamber 12 and the auxiliary chamber 16. The third fluid chamber 123 is formed in the main chamber 12 on the partition plate 14 side and is surrounded by a second orifice 125. The second orifice 125 has an annular passage therein, one end of which communicates with the main chamber 12 through an opening 121 formed in an upper surface of the orifice and the other end communicates with the third fluid chamber through an opening formed in a side wall of the third fluid chamber 123. Thus, the third fluid chamber 123 communicates with the main chamber 12 through the second orifice 125 and admits the fluid from the main chamber 12.

The equilibrium chamber 13 is defined by the partition plate 14 and a second diaphragm 11 disposed between the third fluid chamber 123 and the partition plate 14. The equilibrium chamber 13 is connected to the selector 3 outside the vibration isolating mechanism 1 and receives a negative pressure or an atmospheric pressure. The air chamber 18 is formed below the auxiliary chamber 16 with a first diaphragm 17 in between and is connected to an open air.

The structure of the second diaphragm 11 and associated components will be described in more detail. The second diaphragm 11, as described above, is installed between the third fluid chamber 123 communicating with the main chamber 12 and the equilibrium chamber 13 supplied with a negative pressure or an atmospheric pressure. Hence, on one side (upper side) of the second diaphragm there is the third fluid chamber 123 that admits the fluid from the main chamber 12 through the second orifice 125 having a predetermined volume, so that fluid pressure variations in the main chamber are transmitted at all times to the third fluid chamber 123. On the other side (lower side) of the second diaphragm 11 is the equilibrium chamber 13 which receives either a negative pressure or an atmospheric pressure according to the operation of the selector 3.

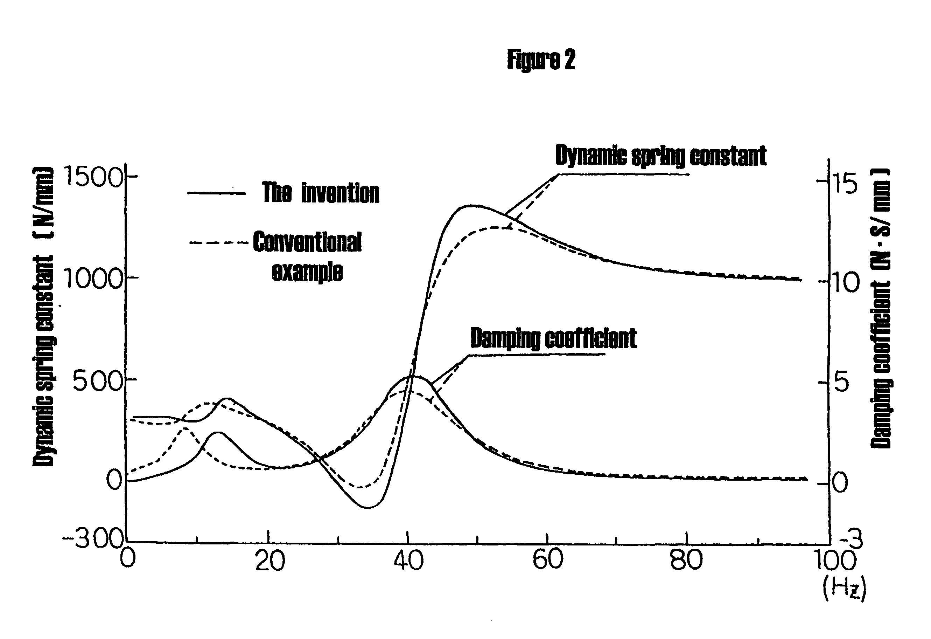

The volumes of the first orifice 15 and the second orifice 125 are set by appropriately selecting an orifice diameter (A) and an orifice length (L) so that their resonance frequencies affect each other. In more concrete terms, as shown in Table 1 below, the value of A/L is appropriately changed from the conventional value to shift the engine shake resonance frequency provided by the first orifice 15 to a slightly higher frequency of around 10-15 Hz, as shown in Figure 2, to enable the first orifice 15 to affect also a vibration system that is intended to absorb and isolate the idling vibrations.

**Table 1**

| Values of A/L of orifices | | | |
|---|---|---|---|
| | 1st orifice (α) | 2nd orifice (β) | β/α |
| Conventional example | 0.21 | 1.67 | 7.95 |
| 1st embodiment | 0.83 | 1.43 | 1.72 |
| 2nd embodiment | 2.87 | 1.43 | 0.50 |

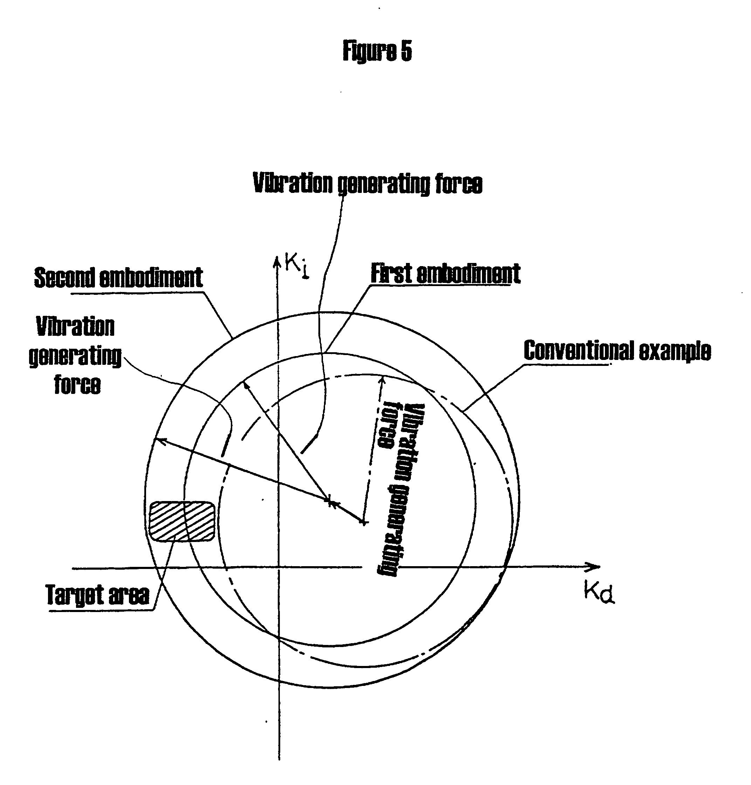

By properly selecting the shapes or configurations of the two orifices 15, 125, particularly their diameters (A) and lengths (L), the resonance frequencies of these orifices are made to influence each other to reduce the dynamic spring constant (Kd) for the idling vibrations. The reduction in the dynamic spring constant allows the values of Kd and Ki to be set within a control target area of the engine mounting system as shown in Figure 5. As a result, the idling vibrations of engine can be absorbed and isolated efficiently by the engine mounting system. Although this embodiment uses the values of Table 1 above for the orifices 15, 125, a more desirable result can be obtained if the ratio of the A/L value of the second orifice 125 or β to the A/L value of the first orifice 15 or α is set in a range of between 1.2 and 5.0. It is particularly preferred that this ratio be set in a range of 1.4 to 4.0.

Description will be now made on the background of the configuration setting of the first and the second orifice according to the invention. The present inventors have found that, in the above-described type vibration isolator, varying the resonance frequency of the first orifice produces an effect also on the resonance frequency of the second orifice. For instance, when increasing the A/L value of the first orifice to increase its resonance frequency above 10 Hz, which is below 10 Hz in the conventional art, the resonance range of the second orifice, which is designed to be about 40 Hz, is shifted to the higher frequency side. This is because that liquid in the isolator does not flow only in the respective resonance ranges. More specifically, even when the resonance frequency of an orifice is 10 Hz, liquid in that orifice moves also at, for instance, a vibration of about 30 Hz. As the liquid movement and phase change vary dependent on the setting of resonance range, the resonance frequencies of the first and the second orifice interact each other. The invention, based on this finding, is intended to further lower the dynamic spring constant by decreasing also the A/L value of the second orifice to the extent that the conventional resonance range of about 40 Hz is obtained.

The selector 3 selects either a negative pressure or an atmospheric pressure for introduction into the equilibrium chamber 13 in the above construction, and comprises a selector valve 31 such as three-way valve and a solenoid 32 for driving the selector valve. On the atmospheric pressure inlet port side of the selector valve 31 is installed a regulation throttle valve 35 which balances the atmospheric pressure introduction speed against the negative pressure introduction speed.

The controller 5 comprises a microcomputer including a microprocessor unit (MPU) and controls the switching operation of the selector 3 by a map control. That is, the controller 5 performs control to vibrate the second diaphragm 11 in synchronism with the engine vibrations in the idling revolution range and, in other revolution range, introduce the atmospheric pressure continuously into the equilibrium chamber 13.

The vibration isolator of this construction operates as follows. The vibrations from the vibrating body propagate through the upper coupling member 6 to the insulator 2, which is then vibrated or deformed to absorb and isolate most of the input vibrations. While most of the vibrations is isolated by the insulator 2, a part of the vibrations is isolated by the vibration isolating mechanism 1 which is detailed below.

For the idling vibrations, the vibration isolating mechanism 1 is controlled by the operation of the selector 3 to introduce into the equilibrium chamber 13 the negative pressure and the atmospheric pressure alternately at a predetermined frequency. In more detail, the selector 3 is operated under the control of the controller 5 at a frequency synchronous with the engine idling vibrations to change the volume of the equilibrium chamber 13 and therefore its pressure. This absorbs, through the third fluid chamber 123 and the second orifice 125, the fluid pressure variation in the main chamber 12 caused by the idling vibrations entered through the insulator 2. The third fluid chamber 123 adjoins the equilibrium chamber 13 through the second diaphragm 11 and communicates to the main chamber 12 through the second orifice 125 of a predetermined volume, so that its volume changes according to the fluid pressure variation in the main chamber 12. Therefore, when the second diaphragm 11 is operated by the introduction of the negative pressure or the atmospheric pressure into the equilibrium chamber 13, the operation or vibration of the second diaphragm 11 is transmitted to the fluid in the main chamber 12 through the third fluid chamber 123 and the second orifice 125. At this time, the fluid in the second orifice 125 communicating with the third fluid chamber 123 and with the main chamber 12 resonates with the volume change of the equilibrium chamber 13. Further, the vibration characteristic of the first orifice 15 and the vibration characteristic of the second orifice 125 are combined, with these vibration characteristics being determined by the value of A/L in Table 1 where A and L designate the diameter and length, respectively, of the orifices 15 and 125. As a result, in the frequency range or vibration range of the engine idling, the dynamic spring constant exhibited by the vibration isolating mechanism 1 falls significantly as indicated by solid lines in Figure 2. The reduction in the dynamic spring constant enables efficient absorption and isolation of the engine idling vibrations.

For the engine shakes which are lower in frequency than the idling vibrations, a damping force is produced by the fluid flowing through the first orifice 15 connecting the main chamber 12 and the auxiliary chamber 16. This damping force suppresses the engine shakes transmitted to the main chamber 12. This is apparent from Figure 2, which shows that the damping coefficient of the isolator in the frequency range of about 10-15 Hz satisfies the level required to damp the engine shakes.

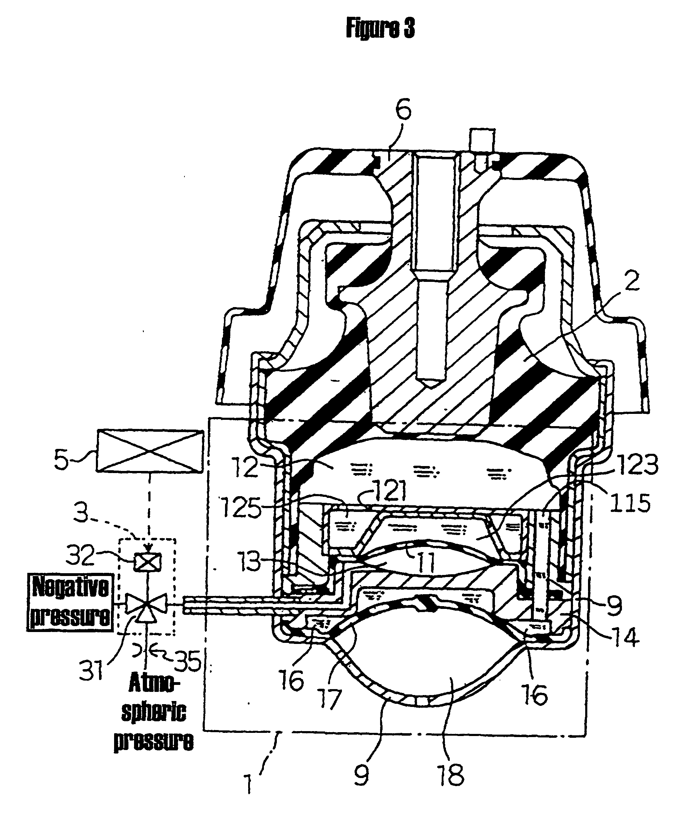

Next, Figure 3 shows the second embodiment of the vibration isolator according to this invention. In the following description, for the sake of simplicity, components similar to the corresponding parts of the first embodiment are assigned like reference numbers and their explanations are omitted.

This isolator has the similar construction to that of the first embodiment except that the first orifice may be arranged in series with the second orifice. That is, the first orifice 15 extends vertically from the auxiliary chamber 16 through the partition plate 14 and connects to the second orifice 125, rather than directly connecting to the main chamber 12. Hence, the vibrating force from the third fluid chamber 123 is conveyed to both orifices 115 and 125. The values of A/L for the orifices 115 and 125, where A and L represent the diameter and the length of these orifices, are set as shown in Table 1.

The ratio of the A/L value (β) of the second orifice 125 to the A/L value (α) of the first orifice 115 may be set to a 0.3-2.0 range for example, in addition to the range shown in Table 1, to obtain a satisfactory result. A range of 0.4-1.0 is particularly preferred.

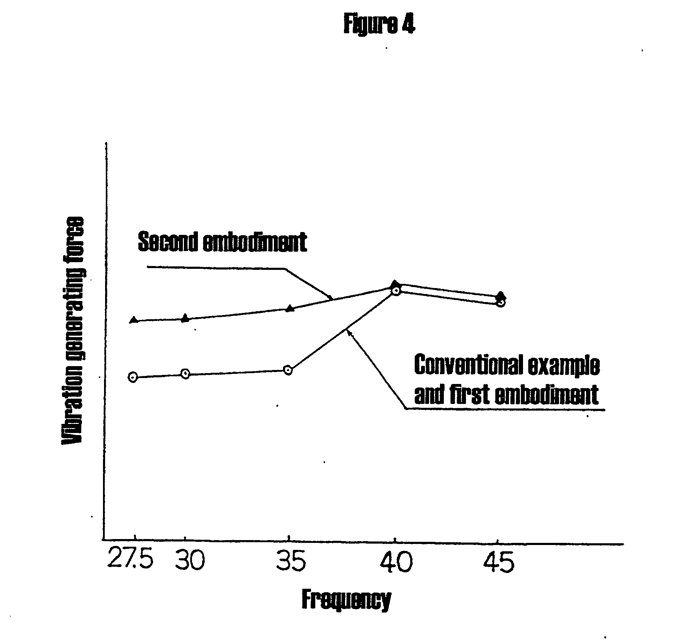

In this embodiment with the above construction, the vibrating force generated in the third fluid chamber 123 to suppress the idling vibrations is amplified by the resonating action of the first orifice 115 before being transmitted to the main chamber 12. In more concrete terms, in Figure 3, the vibrating force or vibration generating force generated in the third fluid chamber 123 by the vibration of the second diaphragm 11 propagates to the second orifice 125 and then to the main chamber 12 and the first orifice 115. The pressure or vibrating force transmitted to the first orifice 115 is amplified by the resonating action of this orifice because the shape of the first orifice 115 is set as shown in Table 1. As a result, the vibrating force or vibration generating force transmitted to the insulator 2 are amplified and increased, as shown in Figures 4 and 5. In this embodiment, therefore, the dynamic spring constant (Kd) decreases and the vibrating force or vibration generating force increases. As a result, the values of Kd and Ki can be set within a control target area of the engine mounting system, which in turn allows the idling vibrations to be absorbed and isolated effectively in this engine mounting system.

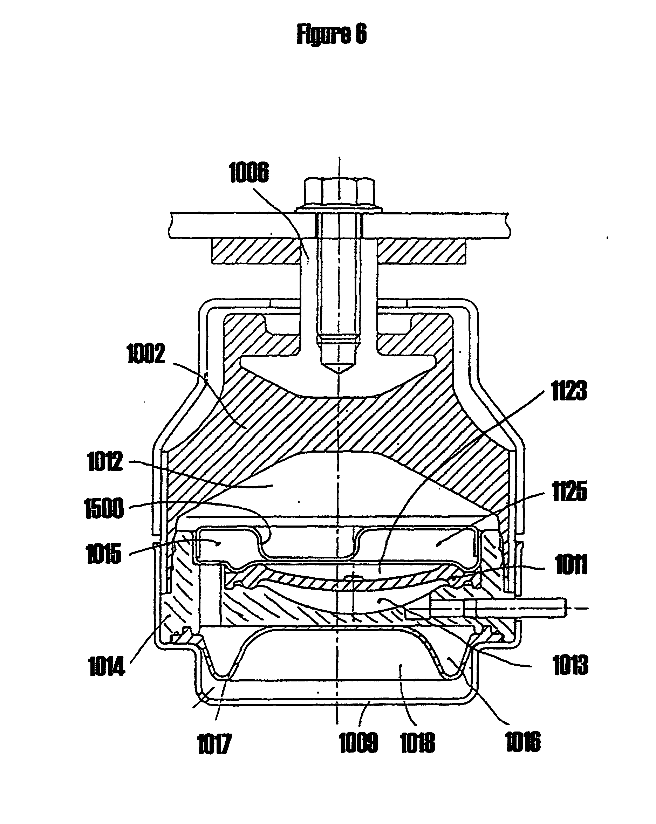

Figure 6 shows a variation of the vibration isolator of Figure 3. This isolator has a construction similar to the preceding embodiment except for the first and second orifices. That is, an upper coupling member 1006, a lower coupling member 1009, an insulator 1002, a main chamber 1012, an auxiliary chamber 1016, first and second diaphragm 1017, 1011, a partition plate 1014, an air chamber 1018, an equilibrium chamber 1013, and a third fluid chamber 1123 may be formed similar to the corresponding parts of the preceding embodiment, although their shapes shown are somewhat different.

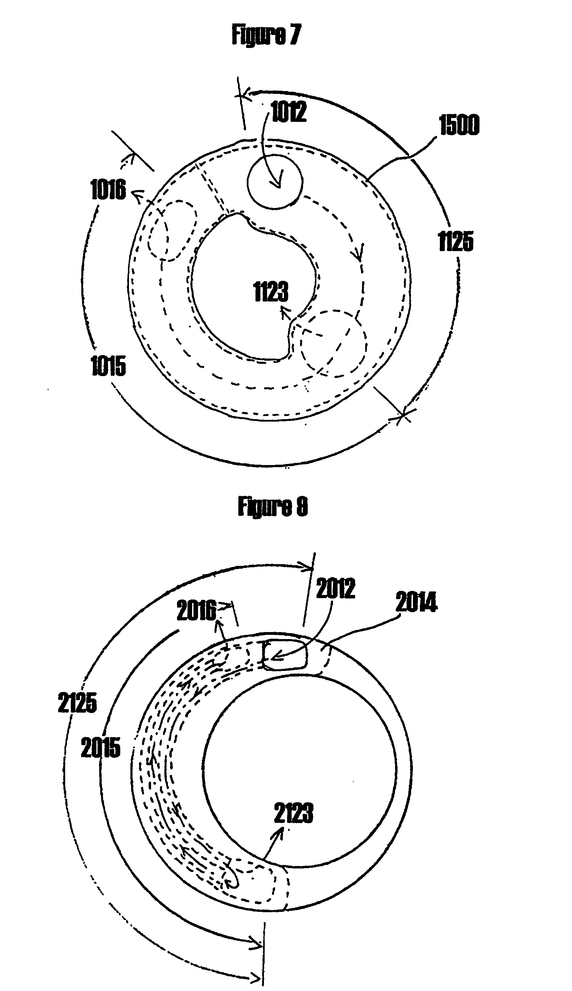

The first orifice 1015 and the second orifice 1125 are provided in a single member 1500. The member 1500 has an annular passage therein, one end of which communicates to the main chamber 1012 and the other end communicates to the auxiliary chamber 1016 through another passage piercing through the partition plate 1014, as shown in Figure 7. An intermediate part of the passage is connected to the third fluid chamber 1123. A portion of the passage from one end to the intermediate part forms the second orifice 1125, and a portion of the passage from the intermediate part to the other end forms the first orifice 1015. The fluid from the main chamber 1012 flows through the second orifice 1125 to the third fluid chamber 1123 and further through the first orifice 1015 to the auxiliary chamber 1016. The vibrating force generated in the third fluid chamber 1123 is transmitted to the main chamber 1012 and the auxiliary chamber 1016 through these orifices 1015, 1125. Forming the two orifices into a single component in this way reduces the number of parts and cost.

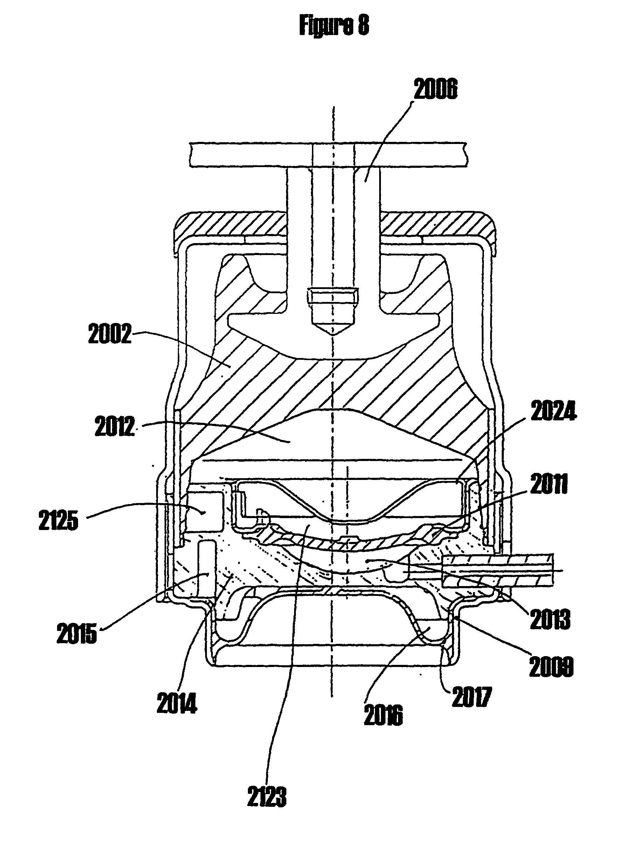

Figure 8 shows another variation of the vibration isolator of Figure 3. This isolator, too, has the similar construction to the preceding embodiment except for the first and second orifices.

An upper coupling member 2006, a lower coupling member 2009, an insulator 2002, a main chamber 2012, an auxiliary chamber 2016, first and second diaphragm 2017, 2011, a partition plate 2014, an equilibrium chamber 2013, and a third fluid chamber 2123 may be formed similar to the corresponding parts of the preceding embodiment.

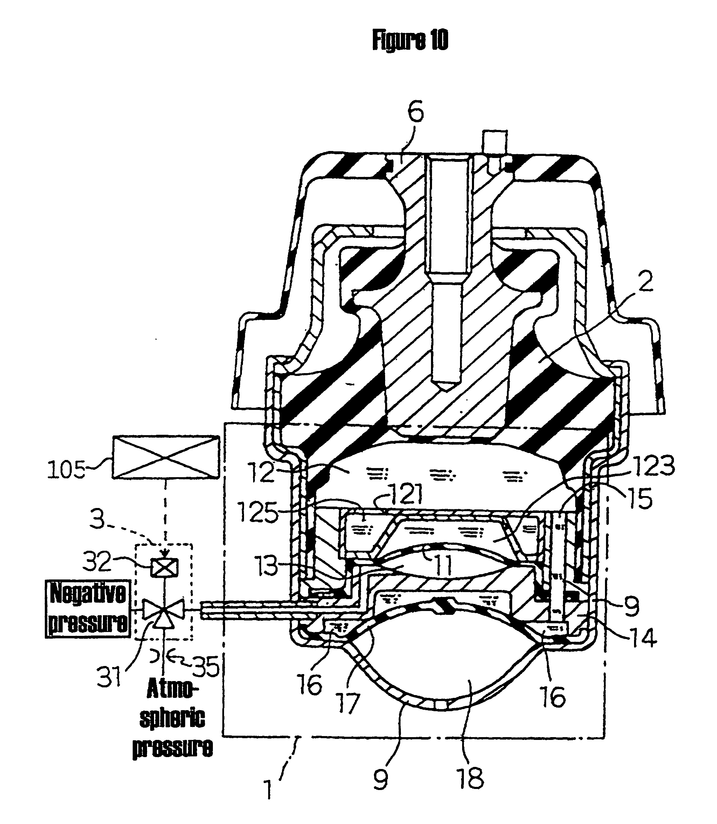

The first orifice 2015 and the second orifice 2125 are provided in the partition plate 2014. In the partition plate 2014 are formed two arc-shaped passages stacked one upon the other which are connected together at one end. As shown in Figure 9, the other end of the upper passage communicates with the main chamber 2012 and the other end of the lower passage communicates with the auxiliary chamber 2016. The connecting portion of these passages communicates with the third fluid chamber 2123. The upper passage functions as the second orifice 2125 and the lower passage as the first orifice 2015. Forming the first and second orifice in this manner can not only reduce the parts cost but also ensure a sufficient length for each orifice to increase the resonating force.

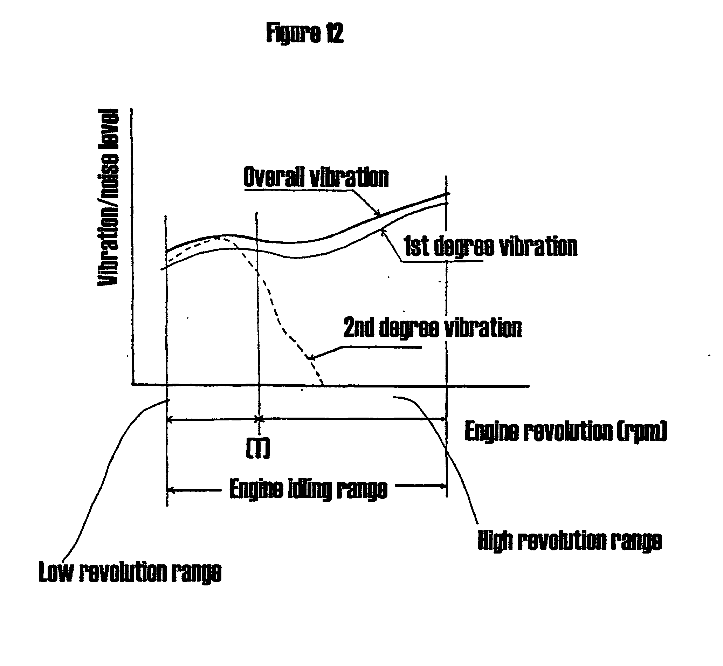

Figure 10 shows the third embodiment of the vibration isolator according to the invention. In addition to the construction of the preceding embodiments, this isolator has a construction that allows a finer control of the engine idling revolution range. That is, the idling revolution range is divided at a transformation point (T) in Figure 12 into a low revolution region and a high revolution region, in each of which regions an independent control is performed. These independent controls are carried out by a predetermined map control method.

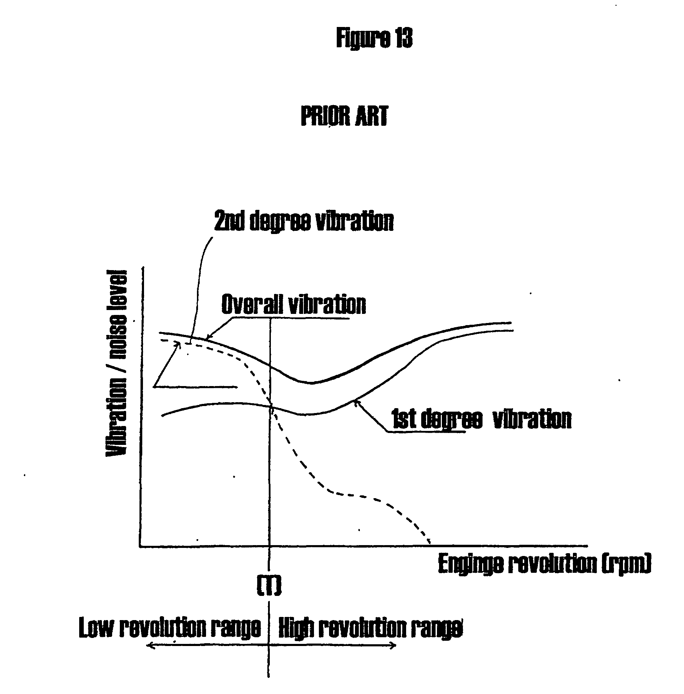

In the engine idling revolution range, particularly in a low revolution region, the steering system resonates with a second degree frequency of the engine explosion-induced vibrations and thus the level of vibration/noise is generally high, as indicated in Figure 13. The level of vibration/noise sharply decreases from the transformation point (T). The vibration/noise level of the second degree vibration component needs to be reduced in lowering the overall vibration/noise level. In the high revolution region in excess of the transformation point (T), the vibration level due to the first degree component of the engine explosion-induced vibrations is high, as shown in Figure 13. Hence, in this region the second diaphragm needs to be vibrated to resonate with the first degree frequency of the engine explosion-induced vibrations.

Considering these, in the low revolution region lower than the transformation point (T) of Figure 12, the isolator of this embodiment operates the second diaphragm 11 through the selector valve 31 of the selector 3 in synchronism with the second degree frequency (f2) of the engine explosion-induced vibrations. This reduces the dynamic spring constant of the vibration isolator for the input vibration with a natural frequency corresponding to the second degree frequency (f2), thus isolating the vibration of the second degree frequency. Next, in the high revolution region, the selector valve 31 of the selector 3 operates the second diaphragm 11 in synchronism with the first degree frequency (f1) of the engine explosion-induced vibrations. This reduces the dynamic spring constant of the vibration isolator for the input vibration with a natural frequency corresponding to the first degree frequency (f1), thus isolating the vibration of the first degree frequency.

These two controls are performed based on map data stored beforehand in a ROM in a controller 105. These controls can reduce the overall vibration/noise level in the engine idling revolution range, as shown in Figure 12.

Rather than performing the map control method described above, the selector 3 and the second diaphragm 11 may be operated in synchronism with the second degree frequency (f2) of the engine explosion-induced vibrations only in the low revolution region. This control is possible by setting the ROM data in the controller 5 correspondingly. In that case, in the high revolution region the rubber characteristic of the insulator 2 is set in advance so that the dynamic spring constant of the insulator 2 for the first degree frequency (f1) of the engine explosion-induced vibrations is reduced. As a result, the dynamic spring constant of the vibration isolator for a particular frequency is reduced in the entire range of engine idling revolution without having to adopting the map control. This in turn lowers the vibration/noise level in the overall idling range.

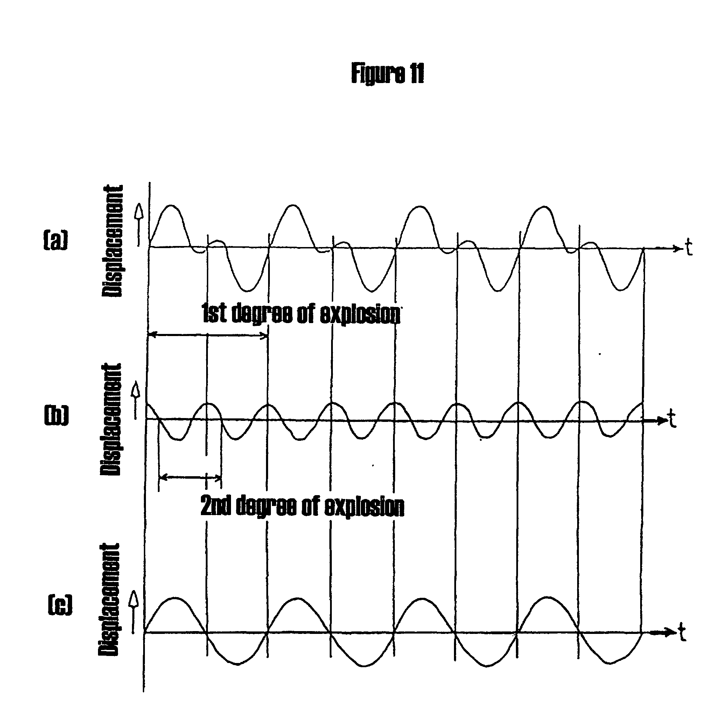

Next, an example control method or vibration damping method intended for a case where the steering system is resonating with the second degree frequency (f2) of the engine explosion-induced vibrations will be described by referring to Figure 11. In this case, the actual vibration waveform is a combination of a first degree frequency (natural frequency f1) and a second degree frequency (natural frequency f2) of the engine explosion-induced vibrations. Of these vibrations, the second degree component with the natural frequency f2 has a high vibration/noise level (see Figure 13). It is therefore necessary to reduce this second degree component of vibration as described above. For this purpose, the selector 3 and the second diaphragm 11 are operated in synchronism with the frequency f2 shown in Figure 11(b). This reduces the vibration/noise level of the second component, as indicated by a dashed line in Figure 12. As a result, the first degree component shown in Figure 11(c) remains but its vibration/noise level indicated by a thin line of Figure 12 is not so high, with the result that the overall vibration/noise level decreases as shown by a thick line in Figure 12. The vibration of the first degree component can be absorbed or isolated by properly adjusting the dynamic spring constant of the insulator 2. It is also possible to use the map control instead to operate the selector 3 and the second diaphragm 11 in synchronism with the first degree frequency (natural frequency f1) of engine explosion-induced vibrations in the high revolution region of the engine idling revolution range.

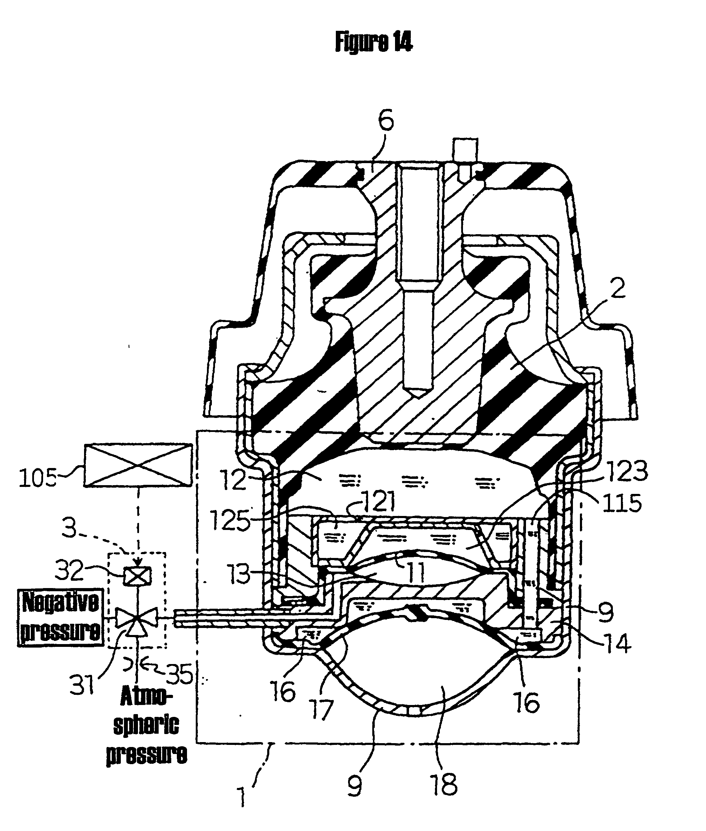

Figure 14 shows the fourth embodiment of the vibration isolator according to the invention. This isolator has the same basic construction as the isolator of Figure 3 and also includes a controller 105 similar to the one used in the third embodiment. This isolator operates in basically the same way as the isolator of Figure 3, with the controller 105 performing fine controls in two divided areas of the engine idling revolution range. This control is similar to the one employed in the third embodiment and thus its explanation is omitted.

The present invention has been described in conjunction with the example embodiments. It should be noted that the invention is not limited to these particular forms and that various modifications may be made to these embodiments without departing from the scope of the appended claims.

## Claims

1. A hydraulic vibration isolator installed between a vibrating body such as an engine and a mounting member, on which the vibrating body is to be mounted, for isolating vibrations, comprising:
a first coupling member (6; 1006; 2006) for attachment to the vibrating body;
a second coupling member (9; 1009; 2009) for attachment to the mounting member; and
an elastic insulator (2; 1002; 2002) and a vibration isolating mechanism (1), both disposed between the first and second coupling members to absorb and isolate vibrations from the vibrating body;
the vibration isolating mechanism including:
a main chamber (12; 1012; 2012) defined in contact with the insulator so that vibrations are directly propagated to the main chamber, the main chamber having an incompressible fluid sealed therein ;
first (15; 115; 1015; 2015) and second orifices (125; 1125; 2125) connecting to the main chamber;
an auxiliary chamber (16; 1016; 2016) communicating with the main chamber through the first orifice, having an incompressible fluid sealed therein, and having at least a part thereof defined by a first elastic diaphragm (17; 1017; 2017) to make its volume variable according to a pressure variation of the fluid in the main chamber;
a third fluid chamber (123; 1123; 2123) communicating with the main chamber through the second orifice to receive the fluid from the main chamber;
an equilibrium chamber (13; 1013; 2012) defined in contact with the third fluid chamber through a second elastic diaphragm (11; 1011; 2011);
selector means (3) communicating with the equilibrium chamber to introduce either an atmospheric pressure or an engine negative pressure into the equilibrium chamber; and
control means (5; 105) for controlling the operation of the selector means to introduce the atmospheric pressure and the engine negative pressure alternately into the equilibrium chamber to vibrate the second diaphragm in an engine idling revolution range and, in other engine revolution range, introduce the atmospheric pressure continuously into the equilibrium chamber, **characterized in that**, in order to make resonance frequencies determined by the fluids in these orifices at least interferingly influence each other,
the first (15) and second orifices (125) are formed so that the ratio (β/α) of a diameter/length (A/L) value (β) of the second orifice to a diameter/length (A/L) value (α) of the first orifice is in a range of between 1.2 and 5.0, or
the first (115; 1015; 2015) and second orifices (125; 1125; 2125) are formed so that the ratio (β/α) of a diameter/length (A/L) value (β) of the second orifice to a diameter/length (A/L) value (α) of the first orifice is in a range of between 0.3 and 2.0.

2. An isolator according to claim 1, wherein the first orifice (15) is directly connected to the main chamber (12).

3. An isolator according to claim 1, **characterized in that** the first orifice (115; 1015; 2015) is connected in series with the second orifice (125; 1125; 2125) and communicates with the main chamber (12; 1012; 2012) through the second orifice.

4. An isolator according to claim 3, **characterized in that** the first (1015) and second orifices (1125) are formed in the same component (1500).

5. An isolator according to claim 3, further including a partition plate (2014) that separates the main chamber (2012) and the auxiliary chamber (2016) and in which the first (2015) and second orifices (2125) are formed.

6. An isolator according to claim 1, **characterized in that** the control means (105) is formed to control the second diaphragm (11; 1011; 2011) to vibrate in synchronism with other than a first degree frequency of engine explosion-induced vibrations in a low revolution region of an engine idling revolution range, the engine idling revolution range being divided at a predetermined transformation point into a low revolution region and a high revolution region.

7. An isolator according to claim 6, **characterized in that** the control means (105) is formed to control the second diaphragm (11; 1011; 2011) to vibrate in synchronism with the first degree frequency of engine explosion-induced vibrations in the high revolution region.

## Patentansprüche

1. Hydraulischer Schwingungsisolator, der zwischen einem Schwingkörper, z.B. einem Motor, und einem Befestigungsteil, an dem der Schwingkörper befestigt ist, um Schwingungen zu isolieren, eingebaut ist, umfassend
ein erstes Kupplungsteil (6, 1006, 2006), zum Anbringen an dem Schwingungskörper;
ein zweites Kupplungsteil (9, 1009, 2009) zum Anbringen an dem Befestigungsteil; und
einen elastischen Isolator (2, 1002, 2002 und einen Schwingungsisolationsmechanismus (1), die beide zwischen dem ersten und zweiten Kupplungsteil zum Absorbieren und Isolieren der Schwingungen des Schwingungskörpers angeordnet sind; wobei
der Schwingungsisolationsmechanismus
eine in Berührung mit dem Isolator so ausgebildete Hauptkammer (12, 1012, 2012), dass sich die Schwingungen direkt zur Hauptkammer, in der ein inkompressibles Fluid eingeschlossen ist, ausbreiten,
eine erste (15, 115, 1015, 2015) und eine zweite (125, 1125, 2125) Öffnung, die mit der Hauptkammer verbunden sind,
eine mit der Hauptkammer durch die erste Öffnung verbundene Hilfskammer (16, 1016, 2016), mit einem darin eingeschlossenen inkompressiblen Fluid und mit mindestens einem von einem ersten Diaphragma (17, 1017, 2017) begrenzten Teil, um ihr Volumen entsprechend einer Druckänderung des Fluids in der Hauptkammer zu verändern,
eine mit der Hauptkammer durch die zweite Öffnung verbundene dritte Fluidkammer (123, 1123, 2123) zur Aufnahme des Fluids von der Hauptkammer,
eine durch ein zweites Diaphragma (11, 1011, 2011) mit der dritten Fluidkammer in Berührung ausgebildete Gleichgewichtskammer (13, 1013, 2012),
eine mit der Gleichgewichtskammer in Verbindung stehende Selektoreinrichtung (3) zur Beaufschlagung der Gleichgewichtskammer entweder mit einem Atmosphärendruck oder einem negativen Motordruck, und
eine Steuereinrichtung (5, 105,) zur Steuerung des Betriebs der Selektroreinrichtung zum abwechselnden Beaufschlagen der Gleichgewichtskammer mit dem Atmosphärendruck und mit dem negativen Motordruck, sodass das zweite Diaphragma in einem Leerlaufdrehzahlbereich des Motors schwingt, und in dem anderen Drehzahlbereich des Motors die Gleichgewichtskammer kontinuierlich mit dem Atmosphärendruck beaufschlagt wird, umfaßt,
**dadurch gekennzeichnet, dass**
zur mindestens gegenseitigen Beinflussung der durch die Fluide in den Öffnungen bestimmten Resonanzfrequenzen
die erste (15) und die zweite Öffnung (125) so ausgebildet sind, dass das Verhältnis (β/α) eines Durchmesser/Längen (A/L) Wertes (β) der zweiten Öffnung zu einem Durchmesser/Längen (A/L) Wertes (α) der ersten Öffnung in einem Bereich zwischen 1,2 und 5,0 liegt oder
die erste (115, 1015, 2015) und die zweite Öffnung (125, 1125, 2125) so ausgebildet sind, dass das Verhältnis (β/α) eines Durchmesser/Längen (A/L) Wertes (β) der zweiten Öffnung zu einem Durchmesser/Längen (A/L) Wertes (α) der ersten Öffnung in einem Bereich zwischen 0,3 und 2,0 liegt.

2. Isolator nach Anspruch 1, wobei die erste Öffnung (15) direkt mit der Hauptkammer (12) verbunden ist.

3. Isolator nach Anspruch 1,
**dadurch gekennzeichnet, dass**
die erste Öffnung (115, 1015, 2015) in Serie mit der zweiten Öffnung (125, 1125, 2125) verbunden ist und mit der Hauptkammer (12, 1012, 2012) durch die zweite Öffnung in Verbindung steht.

4. Isolator nach Anspruch 3,
**dadurch gekennzeichnet, dass**
die erste (1015) und die zweite Öffnung (1125) in dem gleichen Bauteil (1500) ausgebildet sind.

5. Isolator nach Anspruch 3, weiter umfassend eine Trennplatte (2014), die die Hauptkammer (2012) und die Hilfskammer (2016) trennt und in der die erste (2015) und die zweite Öffnung (2125) ausgebildet sind.

6. Isolator nach Anspruch 1,
**dadurch gekennzeichnet, dass**
die Steuereinrichtung (105) zur Steuerung des zweiten Diaphragmas (11, 1011, 2011) ausgebildet ist, sodass es synchron mit einem anderen als einem Frequenzgrad des motorexplosions-induzierten Schwingungsbereichs schwingt, wobei der Motorleerlaufbereich an einem bestimmten Übergangspunkt in einen niedrigen Drehzahlbereich und einen hohen Drehzahlbereich unterteilt ist.

7. Isolator nach Anspruch 6,
**dadurch gekennzeichnet, dass**
die Steuereinheit (105) zur Steuerung des zweiten Diaphragmas (11, 1011, 2011) ausgebildet ist, sodass es synchron mit dem ersten Frequenzgrad der motorexplosions-induzierten Schwingungen in dem hohen Drehzahlbereich schwingt.

## Revendications

1. Isolateur de vibrations hydraulique installé un corps vibrant tel qu'un moteur et un élément de support, sur lequel le corps vibrant doit être monté, pour isoler des vibrations, comprenant :
un premier élément de couplage (6 ; 1006 ; 2006) pour une fixation au corps vibrant ;
un deuxième élément de couplage (9 ; 1009 ; 2009) pour une fixation à l'élément de support ; et
un isolateur élastique (2 ; 1002 ; 2002) et un mécanisme d'isolation de vibrations (1), disposés tous deux entre les premier et deuxième éléments de couplage pour absorber et isoler les vibrations provenant du corps vibrant ;
le mécanisme d'isolation de vibrations comprenant :
une chambre principale (12 ; 1012 ; 2012) définie en contact avec l'isolateur de sorte que les vibrations sont propagées directement vers la chambre principale, la chambre principale comprenant un fluide incompressible enfermé hermétiquement à l'intérieur ;
des premiers (15; 115 ; 1015 ; 2015) et des deuxièmes orifices (125; 1125; 2125) se raccordant à la chambre principale;
une chambre auxiliaire (16; 1016 ; 2016) communiquant avec la chambre principale à travers le premier orifice, comprenant un fluide incompressible enfermé hermétiquement à l'intérieur, et comprenant au moins une partie de celui-ci définie par un premier diaphragme élastique (17 ; 1017 ; 2017) pour rendre son volume variable selon une variation de pression du fluide dans la chambre principale ;
une troisième chambre de fluide (123 ; 1123; 2123) communiquant avec la chambre principale à travers le deuxième orifice pour recevoir le fluide provenant de la chambre principale ;
une chambre d'équilibre (13; 1013 ; 2012) définie en contact avec la troisième chambre de fluide à travers un deuxième diaphragme élastique (11 ; 1011 ; 2011) ;
des moyens formant sélecteur (3) communiquant avec la chambre d'équilibre pour introduire soit une pression atmosphérique ou une dépression de moteur dans la chambre d'équilibre ; et
des moyens de commande (5 ; 105) pour commander le fonctionnement des moyens formant sélecteur pour introduire la pression atmosphérique et la dépression de moteur en alternance dans la chambre d'équilibre pour faire vibrer le deuxième diaphragme dans une plage de vitesses de rotation de ralenti moteur et, dans une autre plage de vitesse de rotation de moteur, introduire la pression atmosphérique en continu dans la chambre d'équilibre, **caractérisé en ce que**, pour amener des fréquences de résonance déterminées par les fluides dans ces orifices au moins à s'influencer mutuellement par interférence,
les premier (15) et deuxièmes orifices (125) sont formés de sorte que le rapport (β/α) d'une valeur (β) diamètre/longueur (A/L) du deuxième orifice sur une valeur (α) de diamètre/longueur (A/L) du premier orifice se trouve dans une plage entre 1,2 et 5,0 ou
les premiers (115; 1015 ; 2015) et deuxièmes orifices (125; 1125; 2125) sont formés de sorte que le rapport (β/α) d'une valeur (β) de diamètre/longueur (A/L) du deuxième orifice sur une valeur (α) de diamètre/longueur (A/L) du premier orifice est dans une plage entre 0,3 et 2,0.

2. Isolateur selon la revendication 1, dans lequel le premier orifice (15) est directement raccordé à la chambre principale (12).

3. Isolateur selon la revendication 1, **caractérisé en ce que** le premier orifice (115 ; 1015 ; 2015) est raccordé en série avec le deuxième orifice (125 ; 1125; 2125) et communique avec la chambre principale (12 ; 1012 ; 2012) à travers le deuxième orifice.

4. Isolateur selon la revendication 3, **caractérisé en ce que** les premier (1015) et deuxième orifices (1125) sont formés dans le même composant (1500).

5. Isolateur selon la revendication 3, comprenant en outre une plaque de séparation (2014) qui sépare la chambre principale (2012) et la chambre auxiliaire (2016) et dans laquelle les premier (2015) et deuxième orifices (2125) sont formés.

6. Isolateur selon la revendication 1, **caractérisé en ce que** les moyens de commande (105) sont formés pour commander le deuxième diaphragme (11 ; 1011 ; 2011) pour vibrer en synchronisation avec une autre fréquence qu'une fréquence de premier degré de vibrations induites par explosion du moteur dans une zone de vitesses de rotation basse d'une plage de vitesses de rotation de ralenti moteur, la plage de vitesses de rotation de ralenti moteur étant divisée au niveau d'un point de transformation prédéterminé en une zone de vitesses de rotation vitesses de rotation basse et une zone de vitesses de rotation haute.

7. Isolateur selon la revendication 6, **caractérisé en ce que** les moyens de commande (105) sont formés pour commander le deuxième diaphragme (11 ; 1011 ; 2011) pour vibrer en synchronisation avec la fréquence de premier degré de vibrations induites par explosion de moteur dans la zone de vitesses de rotation haute.
